# EUROPÄISCHE PATENTSCHRIFT

(11) **EP 1 310 501 B1**
(45) Veröffentlichungstag und Bekanntmachung des Hinweises auf die Patenterteilung: **05.01.2005**
(21) Anmeldenummer: 02023744.2
(22) Anmeldetag: 24.10.2002
(51) Int. Cl.: C07F 7/12, C07F 7/08, B01J 19/12

(54) **Verfahren zur Chlorierung von Methylsilanen**
Process for the chlorination of methylsilanes
Procédé de chloration de méthylsilanes

(30) Priorität: 08.11.2001 DE 10154943
(43) Veröffentlichungstag der Anmeldung: 14.05.2003
(73) Patentinhaber: Wacker-Chemie GmbH, 81737 München (DE)
(72) Erfinder: Hollfelder, Helmut, Dr., 84489 Burghausen (DE); Pflaum, Siegfried, Dr., 84375 Kirchdorf (DE); Riener, Franz, 84375 Kirchdorf (DE)
(74) Vertreter: Budczinski, Angelika

(56) Entgegenhaltungen:
- DE-A- 2 150 718
- DE-A- 2 614 197
- DE-C- 850 446
- US-A- 3 357 907
- DATABASE CA [Online] CHEMICAL ABSTRACTS SERVICE, COLUMBUS, OHIO, US; CERNY, OTAKAR ET AL: "Chloromethyltrichlorosilane by photochemical chlorination of methyltrichlorosilane" retrieved from STN Database accession no. 70:57998 CA XP002230197 & CS 127 181 1 (CERNY, OTAKAR;HAJEK, JOSEF; LANGNER, JAROSLAV; VANA, MILOS)

## Beschreibung

Die Erfindung betrifft ein Verfahren zur Chlorierung von Methylsilanen durch Umsetzung von Methylsilanen mit Chlor in Anwesenheit von Chlorwasserstoff sowie eine geeignete Vorrichtung zu dessen Durchführung.

Es ist bekannt, dass Chlormethylchlorsilane durch Umsetzung von Methylchlorsilanen mit Chlor unter Einwirkung von energiereichem Licht in flüssiger und gasförmiger Phase hergestellt werden können. Hierzu sei z.B. auf DE-A 21 50 718 (Bayer AG, offengelegt am 19.04.1973) verwiesen, in der ein Verfahren zur Chlorierung von Methylchlorsilanen durch Umsetzung der Eduktsilane mit Chlor offenbart wird, wobei die Methylsilane mit Chlor in einer ersten Zone vorvermischt werden und diese Mischung dann in einer zweiten Zone einer die Photoreaktion auslösenden Strahlung ausgesetzt wird und die fotochemische Reaktion unterhalb des Siedepunkts des zu chlorierenden Methylsilans durchgeführt wird. In DE-A 26 14 197 (Dynamit Nobel AG, offengelegt am 13.10.1977) wird die kontinuierliche Fotochlorierung von Methylsilanen mit Chlor beschrieben, wobei die fotochemische Reaktion bei der Siedetemperatur des Reaktionsgemisches durchgeführt wird. In DE 850 446 C werden Verfahren zur Entkeimung von Wasser oder Anregung der Vitamin D-Bildung in Milch beschrieben, wobei Rohrreaktoren besonders bevorzugt zur Anwendung kommen

US 3,357,907 A beschreibt mit der fotochemischen Chlorierung von 1,1-Dichlorethen eine Anwendung, bei der Quarz als Material für die Bestrahlungseinrichtung verwendet wird.

Die bekannten Verfahren weisen jedoch häufig schwerwiegende Nachteile auf, insbesondere hinsichtlich Wirtschaftlichkeit und gefahrloser Durchführung.

Gegenstand der vorliegenden Erfindung ist ein Verfahren zur Herstellung von Chlormethylgruppen aufweisenden Silanen der Formel

(Cl_{y}CH_{3-y})ₐ(CH₃)_{b}SiCl_{4-a-b} (I)

mit
y gleich 1, 2 oder 3, bevorzugt 1,
a gleich 1, 2, 3 oder 4, bevorzugt 1,
b gleich 0, 1, 2 oder 3, mit der Maßgabe, dass die Summe a+b gleich 1, 2, 3 oder 4 ist,
dadurch gekennzeichnet, dass
Methylsilane der Formel

(CH₃)_{a+b}SiCl_{4-(a+b)} (II),

mit Chlor in Gegenwart von Chlorwasserstoff von Anfang an in einer Menge von mindestens 0,2 Gew.-%, bezogen auf das Gewicht an eingesetztem Methylsilan der Formel (II), unter Einwirkung von die Chlorierung auslösender elektromagnetischer Strahlung umgesetzt werden, wobei Chlor in Bezug auf das Methylsilan der Formel (II) unterstöchiometrisch eingesetzt wird und die Umsetzung bei Temperaturen unterhalb des Siedepunkts des Methylsilans der Formel (II) erfolgt.

Silane der Formel (II), die beim erfindungsgemäßen Verfahren eingesetzt werden, sind Methyltrichlorsilan, Dimethyldichlorsilan, Trimethylchlorsilan und Tetramethylsilan.

Obwohl durch die Formeln (I) und (II) nicht wiedergegeben, können bei dem erfindungsgemäßen Verfahren auch Silane der Formel (II) eingesetzt werden, in welchen die Methylgruppen ganz oder teilweise durch andere Alkylgruppen, wie z.B. Ethyl-, Propyl-, Butylreste, etc., ersetzt sind, was aber nicht bevorzugt ist.

Bei dem erfindungsgemäßen Verfahren liegt das molare Verhältnis von eingesetztem Methylsilan der Formel (II) zu Chlor bevorzugt oberhalb 2,0:1,0, besonders bevorzugt im Bereich von 6,0:1,0 bis 31,0:1,0.

Bei dem erfindungsgemäßen Verfahren wird Chlorwasserstoff in einer Menge von mindestens 0,2 Gew.-%, bezogen auf das Gewicht an eingesetztem Methylsilan der Formel (II), eingesetzt. Besonders bevorzugt wird Chlorwasserstoff in Form eines mit Chlorwasserstoff bei Normaldruck und maximal 40°C gesättigten Methylsilans eingesetzt.

Das erfindungsgemäße Verfahren wird bevorzugt bei Temperaturen, welche 5 bis 15°C unterhalb des Siedepunkts des zu chlorierenden Methylsilans der Formel (II) liegen, und einem Druck der umgebenden Atmosphäre, also zwischen 900 und 1500 hPa, durchgeführt. Das erfindungsgemäße Verfahren kann aber auch bei höheren oder niedrigeren Drücken durchgeführt werden.

Bei dem erfindungsgemäßen Verfahren wird die Bestrahlung in einem Wellenlängenbereich von bevorzugt 200 bis 800 nm, besonders bevorzugt 300 bis 400 nm, durchgeführt. Als Strahlenquelle können dabei alle Lampen dienen, die auch bisher bei der Fotochlorierung von Methylsilanen eingesetzt worden sind, wobei sich die Strahlungsquelle innerhalb oder außerhalb des Reaktors befinden kann.

Beispiele für Lampen, die bei dem erfindungsgemäßen Verfahren zur Erzeugung der die Fotoreaktion auslösenden Strahlung eingesetzt werden können, sind UVA-Leuchtstofflampen sowie Quecksilber-Mitteldruckstrahler mit bevorzugter Wellenlänge von 360 bis 370 nm.

Die erfindungsgemäße Strahlung hat eine bevorzugte Strahlungsdichte von 15 Einstein/hm², wie z.B. in Anlagen zur großtechnischen Herstellung von Chlormethylsilanen der Formel (I) einsetzbar.

Das erfindungsgemäße Verfahren kann kontinuierlich wie diskontinuierlich durchgeführt werden, wobei die kontinuierliche Verfahrensweise besonders bevorzugt ist und im folgenden näher beschrieben werden soll.

Das erfindungsgemäße Verfahren kann in allen Reaktortypen, die auch bisher zur Durchführung kontinuierlicher Reaktionen eingesetzt worden sind, durchgeführt werden, wie etwa Rohrreaktoren, Schleifenrohrreaktoren und Rührbehälter. Bevorzugt handelt es sich bei den eingesetzten Reaktoren um Rohrrektoren und Schleifenrohrreaktoren, wobei Rohrreaktoren besonders bevorzugt zur Anwendung kommen. Abhängig vom gewählten Reaktortyp können chlorierte Reaktionsprodukte gegebenenfalls in den Fotoreaktor zurückgeführt werden. Zum Beispiel ist beim Schleifenrohrreaktor eine vollständige Rückführung der chlorierten Reaktionsprodukte möglich, während beim Rohrreaktor die chlorierten Reaktionsprodukte bevorzugt nicht rückgeführt werden.

Das erfindungsgemäße Verfahren wird bevorzugt so geführt, dass das Reaktionsgemisch bevorzugt maximal 35 Gew.-% Chlormethylsilan der Formel (I), besonders bevorzugt 5 bis 15 Gew.-% Chlormethylsilan der Formel (I), enthält.

Die Edukte Chlor und Methylsilan der Formel (II) werden bevorzugt einzeln ohne Vormischung in den Reaktor eingeleitet und der Bestrahlung ausgesetzt. Chlorwasserstoff wird einzeln in den Reaktor eingeleitet oder mit dem Edukt Methylsilan der Formel (II) beliebig vorvermischt. So kann entweder Chlorwasserstoff mit zu chlorierendem Methylsilan der Formel (II) vorvermischt oder Chlorwasserstoff enthaltendes Recycling-Methylsilan aus der Aufarbeitung von Rohprodukt verwendet oder Chlorwasserstoff enthaltendes Reaktionsgemisch eingesetzt werden.

Bevorzugt wird bei dem erfindungsgemäßen Verfahren das Einbringen der Edukte sowie von Chlorwasserstoff im Gleichstrom in den Fotoreaktor, besonders bevorzugt in Abwesenheit chlorierter Reaktionsprodukte bzw. unter Ausschluss von Reaktionsgemisch (Einsatz von nur reinen Edukten).

Die erfindungsgemäße Reaktion wird unterhalb des Siedepunkts des zu chlorierenden Methylsilans der Formel (II) vorzugsweise derart geführt, dass gebildeter Chlorwasserstoff entsprechend seiner Löslichkeit im Reaktionsgemisch möglichst vollständig bereits im Reaktor ausgast. Die Reaktionstemperatur wird vorzugsweise mittels Überschuss an zu chlorierendem Methylsilan mit einer Temperatur deutlich unter Siedetemperatur gesteuert. Restlicher Chlorwasserstoff wird zusammen mit überschüssigem zu chlorierenden Methylsilan der Formel (II) bei der Destillation des Reaktionsgemisches entfernt.

In einer bevorzugten Ausführungsform des erfindungsgemäßen Verfahrens werden in einem senkrechten Rohrreaktor unter Belichten mit einem UV-Strahler von unten Chlor, welches gasförmig oder flüssig sein kann, sowie gasförmiger Chlorwasserstoff mit konstanter Geschwindigkeit und das zu chlorierende Methylsilan der Formel (II) im Überschuss mit solcher Geschwindigkeit eingeleitet, dass die Temperatur des Reaktionsgemisches unterhalb der Siedetemperatur des zu chlorierenden Methylsilans bleibt, wobei sich der UV-Strahler außerhalb oder im Reaktionsrohr befindet und der Rohrreaktor ungekühlt ist. Das vom Rohrreaktor austretende Gas-Flüssig-Gemisch wird dann bevorzugt in einem Verweilbehälter oder Zyklon in flüssige und gasförmige Bestandteile getrennt.

Das im erfindungsgemäßen Verfahren erhaltene flüssige Reaktionsgemisch, das im wesentlichen aus dem chlorierten Methylchlorsilan der Formel (I) mit y=1 und a=1, unumgesetztem Silan der Formel (II), höher chlorierten Produkten sowie Chlorwasserstoff entsprechend seiner Löslichkeit im Reaktionsgemisch besteht, kann an sich bekannten Trennverfahren unterworfen werden, wie beispielsweise einer Destillation über eine Kolonne, bei dem dann das gewünschte Produkt in sehr reiner Form anfällt. Das unumgesetzte Methylsilan der Formel (II) kann zusammen mit im Verweilbehälter oder Zyklon nicht abgetrenntem Chlorwasserstoff in den Rohrreaktor zurückgeführt werden.

Falls bei dem erfindungsgemäßen Verfahren ein Schleifenrohrreaktor verwendet wird, so wird flüssiges, entgastes Reaktionsgemisch aus dem Verweilbehälter bevorzugt abgekühlt und teilweise in den Rohrreaktor zurückgefahren.

Gasförmiger Chlorwasserstoff aus dem Verweilbehälter oder Zyklon wird bevorzugt anderer Verwendung zugeführt.

Besonders bevorzugt wird zur Durchführung des erfindungsgemäßen Verfahrens ein Reaktor verwendet, der dadurch gekennzeichnet ist, dass eine handelsübliche röhrenförmige Quecksilber-Mitteldruckstrahlenquelle mit Quarz-Schutzrohr und Überrohr aus Borsilicatglas (z.B. Duran®) konzentrisch in ein metallisches Außenrohr eingebaut ist und von unten mit Edukten sowie Chlorwasserstoff angeströmt und geflutet betrieben ist. Bei Durchführung des erfindungsgemäßen Verfahrens löst sich an der Glasoberfläche des UV-Strahlers entstehender Chlorwasserstoff vorteilhafterweise gasförmig ab, reduziert in Folge zusätzlich die laminare Grenzschicht der anströmenden Edukte und erhöht dadurch die nutzbare Strahlungdichte des UV-Strahlers.

Ein weiterer Gegenstand der vorliegenden Erfindung ist eine Vorrichtung zur Herstellung von Chlormethylgruppen aufweisenden Silanen unter Einwirkung von die Chlorierung auslösender elektromagnetischer Strahlung, dadurch gekennzeichnet, dass sich eine röhrenförmige Quecksilber-Mitteldruckstrahlenquelle mit Quarz-Schutzrohr und Überrohr aus Borsilicatglas (z.B. Duran®) konzentrisch in einem metallischen Außenrohr befindet und von unten mit Edukten sowie Chlorwasserstoff angeströmt und geflutet betrieben wird.

Beispiele für die nach dem erfindungsgemäßen Verfahren hergestellten Silane der Formel (I) sind (ClCH₂)CH₃SiCl₂, (ClCH₂) (CH₃)₂SiCl, (ClCH₂)SiCl₃, (ClCH₂) (CH₃)₃Si, (ClCH₂)₂CH₃SiCl und (Cl₂CH) (CH₃)₂SiCl.

Das erfindungsgemäße Verfahren hat den Vorteil, dass es auf einfache Art und Weise mit hoher Betriebssicherheit des Reaktors durchgeführt werden kann.

Das erfindungsgemäße Verfahren hat ferner den Vorteil der Energieeinsparung durch Nutzen der Reaktionswärme zum Entgasen sowie bei der destillativen Aufarbeitung des Reaktionsgemisches.

Das erfindungsgemäße Verfahren hat den Vorteil, dass keine separate Reaktorkühlung erforderlich ist.

Des weiteren hat das erfindungsgemäße Verfahren den Vorteil, dass Chlormethylgruppen aufweisende Silane mit hohem Umsatz hergestellt werden können, was eine wirtschaftliche Herstellung der Chlormethylsilane im großtechnischen Maßstab ermöglicht.

Die erfindungsgemäße Vorrichtung hat den Vorteil, dass sie einfach in der Bauart ist und auf einfache Art und Weise betrieben werden kann.

Des weiteren hat die erfindungsgemäße Vorrichtung den Vorteil, dass sie eine hohe Betriebssicherheit bietet und keine besonderen Schutzmaßnahmen gegen energiereiche Strahlung erforderlich sind.

Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

### Beispiel 1

### Herstellung von Chlormethyltrichlorsilan (Silan CM)

Ein Schleifenrohrreaktor mit 1 Liter Inhalt wird mit 720 g Methyltrichlorsilan beschickt. In Methyltrichlorsilan werden 35 g Chlorwasserstoff mit einer Geschwindigkeit von 40 g/h eingeblasen.
Das Glasreaktionsrohr des Schleifenrohrreaktors wird von außen mit einem UV-Strahler von 40 Watt Leistung und einem Wellenlängenbereich von 315 bis 400 nm (UVA-Leuchtstofflampe käuflich erhältlich unter dem Handelsnamen "Osram Eversun") belichtet. Gleichzeitig werden 30 g gasförmiges Chlor mit einer Geschwindigkeit von 44 g/h ins untere Ende der Belichtungsstrecke eingeblasen.
Nach Einleiten von 30 g Chlor werden ins untere Ende der Belichtungsstrecke kontinuierlich 44 g/h Chlor sowie 1200 g/h Methyltrichlorsilan (20°C) dosiert.
Das aus der Belichtungsstrecke austretende Gas-Flüssig-Gemisch (30°C) trennt sich im nachgeschalteten Verweilbehälter: gasförmiger Chlorwasserstoff entweicht über Kopf, flüssiges Reaktionsgemisch wird über einen Hochsiphon abgenommen und reindestilliert.
Im Kreislauf vom Verweilbehälter auf das Glasreaktionsrohr zurückgeführtes flüssiges Reaktionsgemisch wird auf 20°C abgekühlt.
Produkt aus dem Hochsiphon enthält neben Methyltrichlorsilan 5,0% Chlormethyltrichlorsilan sowie 1,2% Dichlormethyltrichlorsilan und 0,7% Trichlormethyltrichlorsilan.

### Beispiel 2

### Herstellung von Chlormethylmethyldichlorsilan (Silan CMM1)

In den senkrecht stehenden Rohrreaktor aus VA-Stahl (Länge = 1850 mm, Durchmesser = 200 mm) mit innen zentrisch integriertem Quecksilber-Mitteldruckstrahler (Länge = 1450 mm, Durchmesser = 150 mm) von 4 kW Leistung und einer bevorzugten Wellenlänge von 366 nm werden von unten kontinuierlich ein Strom von 110 kg/h Flüssigchlor, 4,0 m³/h Dimethyldichlorsilan (30-33°C) sowie 1,0 m³/h gasförmiger Chlorwasserstoff eingeleitet.
Das aus dem Rohrreaktor austretende, belichtete Gas-Flüssig-Gemisch (57°C) wird in einem Zyklon getrennt: Chlorwasserstoff entweicht gasförmig über Kopf, flüssiges Rohprodukt aus dem Sumpfablauf wird einer kontinuierlichen destillativen Trennung in Einzelkomponenten zugeführt. Das Rohprodukt aus dem Zyklon enthält neben Dimethyldichlorsilan 8,6% Chlormethylmethyldichlorsilan sowie 0,7% Dichlormethylmethyldichlorsilan.
Bei der kontinuierlichen Destillation von Rohprodukt wird das nicht umgesetzte Dimethyldichlorsilan über Kopf der Destillationskolonne abgenommen und erneut dem Rohrreaktor zugeführt. Mit Einsatz von Recycling-Dimethyldichlorsilan wird die Dosierung von gasförmigem Chlorwasserstoff in den Rohrreaktor eingestellt.
Recycling-Dimethyldichlorsilan wird mit ca. 210 kg/h frischem Dimethyldichlorsilan auf 4 m³/h ergänzt.
Die Kopftemperatur der Destillationskolonne beträgt 69°C, was dem Siedepunkt von Dimethyldichlorsilan entspricht. Die Sumpftemperatur beträgt im stationären Zustand 130°C.
Das aus dem Sumpf kontinuierlich abgenommene Produkt (Roh-CMM1) hat folgende Zusammensetzung:
91,6% Chlormethylmethyldichlorsilan, 0,1% Dimethyldichlorsilan, 7,1% Dichlormethylmethyldichlorsilan, 1,2% höher siedende Nebenprodukte.
Erhalten werden 245 kg/h Roh-CMM1. Die Gesamtausbeute an Reinprodukt bezüglich eingesetztem Chlor beträgt somit 96,6%.
Roh-CMM1 wird über eine Kolonne reindestilliert. Chlormethylmethyldichlorsilan wird als Hauptlauf in Reinheiten über 99,0% erhalten.

### Beispiel 3

### Herstellung von Chlormethyldimethylchlorsilan (Silan CMM2)

Die Herstellung erfolgt in Analogie zu Beispiel 2.
In den Rohrreaktor mit integriertem Quecksilber-Mitteldruckstrahler, der in Beispiel 2 näher beschrieben ist, werden von unten kontinuierlich 110 kg/h Flüssigchlor, 5,0 m³/h Trimethylchlorsilan (30°C) sowie 1,0 m³/h gasförmiger Chlorwasserstoff eingeleitet. Mit Einsatz von Recycling-Trimethylchlorsilan aus der Destillation wird Chlorwasserstoff geschlossen.
Bei der Destillation anfallendes Recycling-Trimethylchlorsilan wird mit ca. 190 kg/h frischem Trimethylchlorsilan auf 5,0 m³/h ergänzt.
Am Reaktoraustritt beträgt die Temperatur 48°C. Rohprodukt aus dem Zyklon enthält neben Trimethylchlorsilan 10,2% Chlormethyldimethylchlorsilan sowie 0,7% höherchlorierte Silane.
Das aus dem Sumpf der Destillation kontinuierlich abgenommene Produkt (Roh-CMM2) hat folgende Zusammensetzung:
95,5% Chlormethyldimethylchlorsilan, 0,1% Trimethylchlorsilan,
2,7% Dichlormethyldimethylchlorsilan, 1,7% höher siedende Nebenprodukte.
Erhalten werden 220 kg/h Roh-CMM2. Die Gesamtausbeute an Reinprodukt bezüglich eingesetztem Chlor beträgt somit 94,6%. Roh-CMM2 wird über eine Kolonne reindestilliert. Chlormethyldimethylchlorsilan wird als Hauptlauf in Reinheiten über 99,0% erhalten.

### Beispiel 4

### Herstellung von Chlormethyldimethylchlorsilan (Silan CMM2)

Ein Schleifenrohrreaktor mit 2,5 Liter Inhalt wird mit 2,0 kg Trimethylchlorsilan beschickt. In Trimethylchlorsilan werden 35 g Chlorwasserstoff mit einer Geschwindigkeit von 40 g/h eingeblasen.
Das Glasreaktionsrohr des Schleifenrohrreaktors wird von außen mit einem UV-Strahler von 40 Watt Leistung und einem Wellenlängenbereich von 315 bis 400 nm (UVA-Leuchtstofflampe käuflich erhältlich unter dem Handelsnamen "Osram Eversun") belichtet.

Gleichzeitig werden x Mol% gasförmiges Chlor (bezüglich 2,0 kg Trimethylchlorsilan) mit einer Geschwindigkeit von 88 g/h ins untere Ende der Belichtungsstrecke eingeblasen, wobei x die in Tabelle 1 angegebene Bedeutung hat.
Nach Einleiten von x Mol% Chlor werden ins untere Ende der Belichtungsstrecke kontinuierlich x Mol% Chlor/h sowie 625 g/h Trimethylchlorsilan (20°C) dosiert.

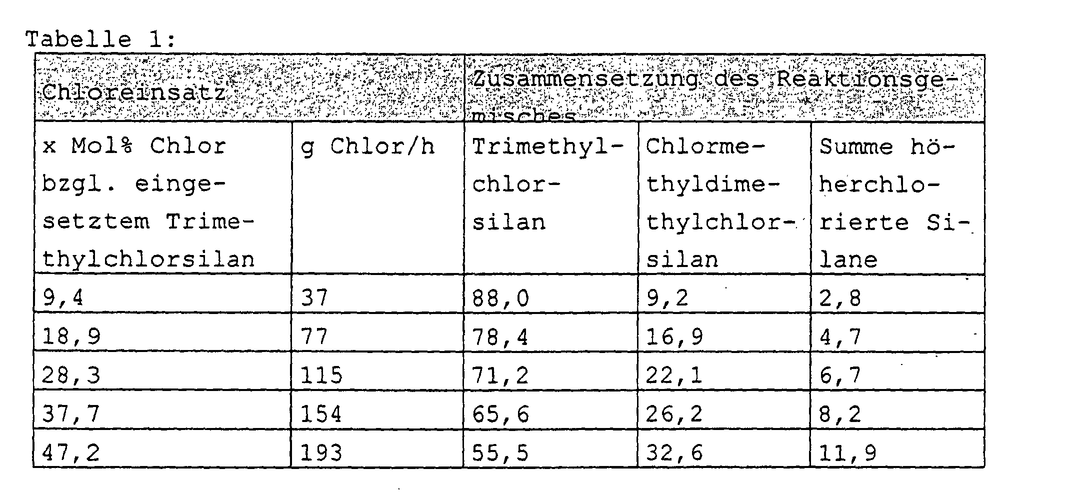

Das aus der Belichtungsstrecke austretende Gas-Flüssig-Gemisch (30°C) trennt sich im nachgeschalteten Verweilbehälter: gasförmiger Chlorwasserstoff entweicht über Kopf, flüssiges Reaktionsgemisch wird über einen. Hochsiphon abgenommen und reindestilliert. Neben Chlormethyldimethylchlorsilan werden Dichlormethyldimethylchlorsilan und Bis(chlormethyl)methylchlorsilan in Reinheiten von mindestens 98% bzw. 96% erhalten.
Im Kreislauf vom Verweilbehälter auf das Glasreaktionsrohr zurückgeführtes flüssiges Reaktionsgemisch wird auf 20°C abgekühlt.

### Beispiel 5

### Herstellung von Chlormethyldimethylchlorsilan (Silan CMM2)

Ein Schleifenrohrreaktor mit 27 Liter Inhalt wird mit 23 kg Trimethylchlorsilan beschickt. In Trimethylchlorsilan werden 1,5 kg Chlorwasserstoff mit einer Geschwindigkeit von 2 kg/h eingeblasen.
Das Glasreaktionsrohr des Schleifenrohrreaktors wird von außen mit einem UV-Strahler von 120 Watt Leistung und einem Wellenlängenbereich von 315 bis 400 nm (UVA-Leuchtstofflampe käuflich erhältlich unter dem Handelsnamen "Osram Eversun") belichtet.
Gleichzeitig werden 3,75 kg gasförmiges Chlor mit einer Geschwindigkeit von 18 kg/h ins untere Ende der Belichtungsstrecke eingeblasen.
Nach Einleiten von 3,75 kg Chlor werden ins untere Ende der Belichtungsstrecke kontinuierlich 18 kg Chlor/h sowie 103 kg/h Trimethylchlorsilan (-10°C) dosiert.
Am Ende der Belichtungsstrecke beträgt die Temperatur 36°C. Das aus der Belichtungsstrecke austretende Gas-Flüssig-Gemisch trennt sich im nachgeschalteten Verweilbehälter: gasförmiger Chlorwasserstoff entweicht über Kopf, flüssiges Reaktionsgemisch wird über einen Hochsiphon abgenommen und reindestilliert.
Im Kreislauf vom Verweilbehälter auf das Glasreaktionsrohr zurückgeführtes flüssiges Reaktionsgemisch wird auf 20°C abgekühlt.
Entgastes Reaktionsgemisch aus dem Verweilbehälter enthält neben unumgesetztem Trimethylchlorsilan 23,9 Gew.-% Chlormethyldimethylchlorsilan sowie 3,3% Dichlormethyldimethylchlorsilan und 2,7% höherchlorierte Silane.
Die Aufarbeitung des Reaktionsgemisches erfolgt durch kontinuierliche oder diskontinuierliche fraktionierte Destillation bei Normaldruck. Als Vorlauf anfallendes unumgesetztes Trimethylchlorsilan wird ohne weitere Reinigung wieder in die Chlorierung eingesetzt. Chlormethyldimethylchlorsilan wird als Hauptlauf in Reinheiten über 99,0 Gew.-% gewonnen.

### Beispiel 6

### Herstellung von Chlormethyltrimethylsilan (Silan-CMM3)

Ein Schleifenrohrreaktor mit 1 Liter Inhalt wird mit 630 g Tetramethylsilan beschickt. In Tetramethylsilan werden 30 g Chlorwasserstoff mit einer Geschwindigkeit von 40 g/h eingeblasen.
Das Glasreaktionsrohr des Schleifenrohrreaktors wird von außen mit einem UV-Strahler (käuflich erhältlich unter dem Handelsnamen "Osram Fluora-Strahler") mit einer Leistung von 18 Watt und einem Wellenlängenbereich von 400 bis 800 nm belichtet. Gleichzeitig werden 86 g gasförmiges Chlor mit einer Geschwindigkeit von 34 g/h ins untere Ende der Belichtungsstrecke eingeblasen.
Nach Einleiten von 86 g Chlor werden ins untere Ende der Belichtungsstrecke kontinuierlich 34 g Chlor/h sowie 250 g/h vorgekühltes Tetramethylsilan (-10°C) dosiert.
Am Ende der Belichtungsstrecke beträgt die Temperatur 0°C bis 1°C. Das aus der Belichtungsstrecke austretende Gas-Flüssig-Gemisch trennt sich im nachgeschalteten Verweilbehälter: gasförmiger Chlorwasserstoff entweicht über Kopf, flüssiges Reaktionsgemisch wird über einen Hochsiphon abgenommen und reindestilliert.
Im Kreislauf vom Verweilbehälter auf das Glasreaktionsrohr zurückgeführtes flüssiges Reaktionsgemisch wird auf -10°C abgekühlt.
Entgastes Reaktionsgemisch aus dem Verweilbehälter enthält neben unumgesetztem Tetramethylsilan 7,2 Gew.-% Chlormethyltrimethylsilan sowie 2,2% höherchlorierte Silane.
Die Aufarbeitung des Reaktionsgemisches erfolgt durch kontinuierliche oder diskontinuierliche fraktionierte Destillation bei Normaldruck. Als Vorlauf anfallendes unumgesetztes Tetramethylsilan wird ohne weitere Reinigung wieder in die Chlorierung eingesetzt.

## Patentansprüche

1. Verfahren zur Herstellung von Chlormethylgruppen aufweisenden Silanen der Formel
(ClyCH_{3-y})ₐ(CH₃)_{b}SiCl_{4-a-b} (I)
mit
y gleich 1, 2 oder 3,
a gleich 1, 2, 3 oder 4,
b gleich 0, 1, 2 oder 3, mit der Maßgabe, dass die Summe a+b gleich 1, 2, 3 oder 4 ist,
**dadurch gekennzeichnet, dass**
Methylsilane der Formel
(CH₃)_{a+b}SiCl_{4-(a+b)} (II),
mit Chlor in Gegenwart von Chlorwasserstoff von Anfang an in einer Menge von mindestens 0,2 Gew.-%, bezogen auf das Gewicht an eingesetztem Methylsilan der Formel (II), unter Einwirkung von die Chlorierung auslösender elektromagnetischer Strahlung umgesetzt werden, wobei Chlor in Bezug auf das Methylsilan der Formel (II) unterstöchiometrisch eingesetzt wird und die Umsetzung bei Temperaturen unterhalb des Siedepunkts des Methylsilans der Formel (II) erfolgt.

2. Verfahren gemäß Anspruch 1, **dadurch gekennzeichnet, dass** das molare Verhältnis von eingesetztem Methylsilan der Formel (II) zu Chlor oberhalb 2,0:1,0 liegt.

3. Verfahren gemäß einem oder mehreren der Ansprüche 1 oder 2, **dadurch gekennzeichnet, dass** es bei Temperaturen, welche 5 bis 15°C unterhalb des Siedepunkts des zu chlorierenden Methylsilans der Formel (II) liegen, und einem Druck der umgebenden Atmosphäre, also zwischen 900 und 1500 hPa, durchgeführt wird.

4. Verfahren gemäß einem oder mehreren der Ansprüche 1 bis 3, **dadurch gekennzeichnet, dass** es kontinuierlich durchgeführt wird.

5. Verfahren gemäß einem oder mehreren der Ansprüche 1 bis 4, **dadurch gekennzeichnet, dass** in einem senkrechten Rohrreaktor unter Belichten mit einem UV-Strahler von unten Chlor, welches gasförmig oder flüssig sein kann, sowie gasförmiger Chlorwasserstoff mit konstanter Geschwindigkeit und das zu chlorierende Methylsilan der Formel (II) im Überschuss mit solcher Geschwindigkeit eingeleitet wird, dass die Temperatur des Reaktionsgemisches unterhalb der Siedetemperatur des zu chlorierenden Methylsilans bleibt, wobei sich der UV-Strahler außerhalb oder im Reaktionsrohr befindet und der Rohrreaktor ungekühlt ist.

6. Vorrichtung zur Herstellung von Chlormethylgruppen aufweisenden Silanen unter Einwirkung von die Chlorierung auslösender elektromagnetischer Strahlung, **dadurch gekennzeichnet, dass** sich eine röhrenförmige Quecksilber-Mitteldruckstrahlenquelle mit Quarz-Schutzrohr und Überrohr aus Borsilicatglas konzentrisch in einem metallischen Außenrohr befindet und von unten mit Edukten sowie Chlorwasserstoff angeströmt und geflutet betrieben wird.

## Claims

1. Process for preparing silanes which contain chloromethyl groups and have the formula
(Cl_{y}CH_{3-y})ₐ(CH₃)_{b}SiCl_{4-a-b} (I)
where
y is 1, 2 or 3,
a is 1, 2, 3, or 4,
b is 0, 1, 2 or 3, with the proviso that the sum a+b is 1, 2, 3 or 4,
**characterized in that**
methylsilanes of the formula
(CH₃)_{a+b}SiCl_{4-(a+b)} (II),
are reacted with chlorine in the presence from the start of at least 0.2% by weight, based on the weight of methylsilane of the formula (II) used, of hydrogen chloride under the action of electromagnetic radiation which triggers the chlorination, with chlorine being used in a substoichiometric amount based on the methylsilane of the formula (II) and the reaction being carried out at temperatures below the boiling point of the methylsilane of the formula (II).

2. Process according to Claim 1, **characterized in that** the molar ratio of methylsilane of the formula (II) used to chlorine is above 2.0:1.0.

3. Process according to one or more of Claims 1 or 2, **characterized in that** it is carried out at temperatures which are from 5 to 15°C below the boiling point of the methylsilane of the formula (II) to be chlorinated and at the pressure of the surrounding atmosphere, i.e. from 900 to 1 500 hPa.

4. Process according to one or more of Claims 1 to 3, **characterized in that** it is carried out continuously.

5. Process according to one or more of Claims 1 to 4, **characterized in that** chlorine, which may be in gaseous or liquid form, and gaseous hydrogen chloride are introduced at a constant rate from below into a vertical tube reactor illuminated by means of a UV lamp and an excess of the methylsilane of the formula (II) to be chlorinated is introduced, also from below, at such a rate that the temperature of the reaction mixture remains below the boiling point of the methylsilane to be chlorinated, with the UV lamp being located outside the reaction tube or in the reaction tube and the tube reactor being uncooled.

6. Apparatus for preparing silanes containing chloromethyl groups under the action of electromagnetic radiation which triggers the chlorination, **characterized in that** a tubular intermediate-pressure mercury vapour lamp having a protective quartz tube and a sheathing tube of borosilicate glass is located concentrically in a metallic outer tube into which starting materials and hydrogen chloride flow from below so that the reactor is operated in a flooded state.

## Revendications

1. Procédé en vue de la fabrication de silanes présentant des groupements de chlorométhyle de la formule
(Cl_{y}CH_{3-y})ₐ(CH₃)_{b}SiCl_{4-a-b} (I)
avec
y égal à 1, 2 ou 3,
a égal à 1, 2, 3 ou 4,
b égal à 0, 1, 2 ou 3, sous réserve que la somme a+b soit égale à 1, 2, 3 ou 4,
**caractérisé en ce que** les méthylsilanes de la formule
(CH₃)_{a+b}SiCl_{4-(a+b)} (II)
réagissent avec le chlore en présence de chlorure d'hydrogène, dès le départ, dans une quantité d'au moins 0,2% en poids, sur la base du poids du méthylsilane utilisé de la formule (II), sous l'action d'un rayonnement électromagnétique déclenchant la chloration, le chlore étant utilisé de manière sous stoechiométrique par rapport au méthylsilane de la formule (II) et la réaction se faisant à des températures en-dessous du point d'ébullition du méthylsilane de la formule (II).

2. Procédé selon la revendication 1, **caractérisé en ce que** le rapport molaire du méthylsilane utilisé de la formule (II) au chlore se situe au-dessus de 2,0:1,0.

3. Procédé selon l'une quelconque des revendications 1 ou 2, **caractérisé en ce qu'**il est effectué à des températures qui se situent de 5 à 15°C en dessous du point d'ébullition du méthylsilane à chlorer de la formule (II) et à une pression de l'atmosphère environnante, par conséquent, à une pression comprise entre 900 et 1500 hPa.

4. Procédé selon l'une quelconque des revendications 1 à 3, **caractérisé en ce qu'**il est effectué en continu.

5. Procédé selon l'une quelconque des revendications 1 à 4, **caractérisé en ce que**, dans un réacteur tubulaire vertical, sous irradiation par un dispositif de rayonnement par UV, on introduit par le bas du chlore, qui peut être gazeux ou liquide, ainsi que du chlorure d'hydrogène gazeux à une vitesse constante et **en ce que** le méthylsilane à chlorer de la formule (II) est introduit en excès à une vitesse telle que la température du mélange réactionnel reste en dessous de la température d'ébullition du méthylsilane à chlorer, le dispositif de rayonnement par UV se trouvant à l'extérieur ou à l'intérieur du tube de réaction et le réacteur tubulaire étant refroidi.

6. Dispositif en vue de la fabrication de silanes présentant des groupements de chlorométhyle sous l'action d'un rayonnement électromagnétique déclenchant la chloration, **caractérisé en ce qu'**une source de rayonnement moyenne pression à mercure sous forme tubulaire avec un tube de protection en quartz et un tube recouvrant en verre de borosilicate se trouve arrangée d'une manière concentrique dans un tube externe métallique et **en ce qu'**elle fonctionne à l'aide d'un afflux par le bas des produits de départ ainsi que du chlorure d'hydrogène et à l'aide d'un dispositif d'échappement.
